# EUROPEAN PATENT APPLICATION

(11) **EP 4 095 699 A1**
(43) Date of publication of application: **30.11.2022**
(21) Application number: 21176214.1
(22) Date of filing: 27.05.2021
(51) Int. Cl.: G06F 11/36, G06F 8/658

(54) **PARTIAL RECURRENT AUTOMATED SOFTWARE IMPROVEMENT**

(71) Applicant: Siemens Aktiengesellschaft, 80333 München (DE)
(72) Inventor: Feldmeyer, Alfred, 83022 Rosenheim (DE); Höfig, Kai, 83101 Rohrdorf (DE)

(57) **Abstract**

The invention discloses an automated method for generating candidate patches for improving a computer program, by:
a) Deploying at least one general automatic program repair tool (APR) selected according to a first book of rules,
b) if possible, deploying at least one specialized automatic program repair tool (APR) selected according to a second book of rules,
C)- defining a global maximum timeout limit for running all tools (APR) and a maximum repetitions limit for running each tool,
D) if a specialized tool (APR) is deployed, then running the at least one specialized tool (APR) generating at least one first patch,
E) running the at least one general tool (APR) and generating at least one second patch, whereby
- if a general tool (APR) is marked or known as nondeterministic the general tool will be restarted until the maximum repetition limit has been reached, and
- by comparing newly generated first and second patches with already generated first and second patches clustering the first and second patches by Levenshtein distance,

f) generating of first and second patches is ending if any general tool (APR) is not running anymore, a pre-defined number of first and second patches has been generated, or the global maximum timeout limit is up, and
g) presenting the generated first and second patches to a user (DP).

Furthermore, a corresponding computational arrangement and a use of the computational arrangement are disclosed.

## Description

### FIELD OF THE INVENTION

The present invention relates to an automated method for generating candidate patches for improving a computer program. The invention further relates to a corresponding computational arrangement and a use of the computational arrangement.

### BACKGROUND OF THE INVENTION

A patch is a set of changes to a computer program, or its supporting data designed to update, fix, or improve it. This includes fixing security vulnerabilities and other bugs, with such patches usually being called bugfixes or bug fixes. Patches are often written to improve the functionality, usability, or performance of a software program.

Software is tremendously increasing in size and complexity in the last decades and so are the numbers of mistakes or bugs that are integrated during the development phase. Therefore, many approaches have been developed that are connected to automated software or program repair. Automatic program repair (APR) is the automatic repair of software bugs without the intervention of a human programmer. It is also commonly referred to as automatic patch generation, automatic bug repair, or automatic bug-fixing. The typical goal of such techniques is to automatically generate correct patches to eliminate bugs in software programs without causing software regression.

Each of those approaches utilizes different technologies and aims for very specific aspects of defects to repair. Other technologies aim for a more general approach, however the more open the kind of solution is, the larger is the search space or the number of options such a technology has.

Each of those approaches can be utilized to not only fix a software defect (= bug) but also can be used to improve certain non-functional quality measures such as reliability, safety, runtime, availability, and energy consumption.

It can be summarized, that none of these technologies separately solves the overall problem of a general optimization of a software intense system, nor it is guaranteed that there is a result after applying a single technology at all. Furthermore, applying multiple existing approaches for automated software repair sequentially is also not an option since optimizations from one approach can be erased by another.

Another aspect of the problem is the application in development environments. It is not acceptable for a developer when automated software repair takes unacceptably long to be executed. Thus, the delay for delivering the result should be as short as possible.

One example of a technology for automated software repair using heuristics is GenProg (https://dl.acm.org/doi/10.1145/1569901.1570031). This technology was implemented multiple times for different programming languages and different variants. Nonetheless, as GenProg is a search-based engineering approach and thus is not limited in delivering a certain solution class, but it implies many random steps and makes the search non-deterministic. The improvement of software is based on test cases. If a bug cannot be identified by a test case, it cannot be fixed using GenProg or any other similar technology such as Stage Program Repair, CAPGen, SimFix or Kali.

Another group of more mathematical-based technologies is constraint-based patch generation. Here the vague fault location is enriched with markers which presents the state of the program of a certain line. Using several methodologies from the field of satisfiability modulo theory, the values for those markers are combined in a way so that constraints can be formulated and solved. Then that constraints are translated into code by program synthesis. Again, a test suite is used here, to verify a generated patch. As the values for the markers are extracted from that test suite by overfitting of the patch, it is difficult to overcome and strongly depends on the quality of the test suite itself. Nevertheless, constraint-based approaches are in general much faster than heuristic approaches. Examples for that group of approaches are Angelix (https://dl.acm.org/doi/10.1145/2884781.2884807) or Dynamoth (https://dl.acm.org/doi/10.1145/2896921.2896931).

The most reduced solution space is given by template-based approaches where each template or edit script is meant to fix a known issue class. As the complexity of templates can vary, some approaches generate abstract but quite intelligent edit instructions. This is a way to transfer knowledge from one codebase to another and is so closely related to learning-based approaches. More important than generating the templated is to figure out, whether they can be applied to the codebase. Nevertheless, one template solves one single specific problem. An example for such a templated-based approach is PAR, which is widely known in software development (https://ieeexplore.ieee.org/document/6606626/).

As can be seen from state of the art, each technology aims for a certain aspect of the software to repair. Are there either things that are extracted from other software projects (e.g., in template-based approaches) or that ate utilizing test suites to identify and repair comparatively small software bugs. According to state of the art, there is no technology that combines all benefits from each technology with each other to enable for a more general approach of automated software improvement. Additionally, this technology used parallel execution to address for the problem of acceptable execution time during the development process as described in the problem description.

In deterministic algorithms, for a given input, a computer always produces the same output going through the same states but in case of non-deterministic algorithm, for the same input, the compiler may produce a different output in different runs. The non-deterministic algorithms can show different behaviours for the same input on different execution and there is a degree of randomness to it.

### SUMMARY OF THE INVENTION

The objective of the present invention is to provide a solution to improve automated software repair compared to state of the art.

To accomplish the objective, the present invention provides a solution according to the independent claims. Advantageous embodiments are provided in the dependent claims.

The invention claims an automated method for generating candidate patches for improving a computer program, characterized by the steps:
a) Deploying at least one general automatic program repair tool (= tool) selected according to a first book of rules,
b) if possible, deploying at least one specialized automatic program repair tool selected according to a second book of rules,
c) defining a global maximum timeout limit for running all tools and a maximum repetitions limit for running each tool,
d) if a specialized tool is deployed, then running the at least one specialized tool generating at least one first patch,
e) running the at least one general tool and generating at least one second patch, whereby
   - if a general tool is marked or known as non-deterministic the general tool will be restarted until the maximum repetition limit has been reached, and
   - by comparing first and second patches with already generated first and second patches clustering the first and second patches by Levenshtein distance,
f) generating of first and second patches is ending if any general tool is not running anymore, a pre-defined number of first and second patches has been generated, or the global maximum timeout limit is up, and
g) presenting the generated first and second patches to a user.

The advantage of the invention is an algorithm to combine several methodologies for automatic program repair for convenient usage and faster results, compared to the state of the art.

In a further embodiment of the method the first and second book of rules comprises rules to generate first and second patches suitable for the target programming language of the computer program.

In a further embodiment of the method the first book of rules comprises rules derived from a pre-defined technical specification file and error messages of a pre-defined test suite executing the computer program.

In a further embodiment of the method the second book of rules comprises rules to deploy specialized tools specialized on at least one pre-defined target-bug.

In a further embodiment of the method the Levenshtein distance is defined in the technical specification file as a pre-defined value depending on the programming language and the complexity of a bug.

In computer science, the Levenshtein distance is a string metric for measuring the difference between two sequences. Informally, the Levenshtein distance between two words is the minimum number of single-character edits (insertions, deletions, or substitutions) required to change one word into the other.

In a further embodiment of the method the cluster of first and/or second patches is considered as one patch and comprises similar patches according to the Levenshtein distance.

In a further embodiment of the method the generated first and second patches are accessible via a control instance module's user interface as a git patch file.

In a further embodiment of the method the tools comprising tools with a template-based approach, a learning-based approach, a constraint-based approach, and/or a heuristic-based/search-based approach.

The invention further claims acComputational arrangement comprising computational capacity. The arrangement is set-up to perform a method according to the inventive method.

Finally, the invention claims the use of the computational arrangement according to the invention to generate first and second patches to fix bugs in a software program.

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of the system,
- FIG. 2: shows a flow chart for deployment of automatic program repair tools, and
- FIG. 3: shows a flow chart generating

### DETAILED DESCRIPTION OF THE INVENTION

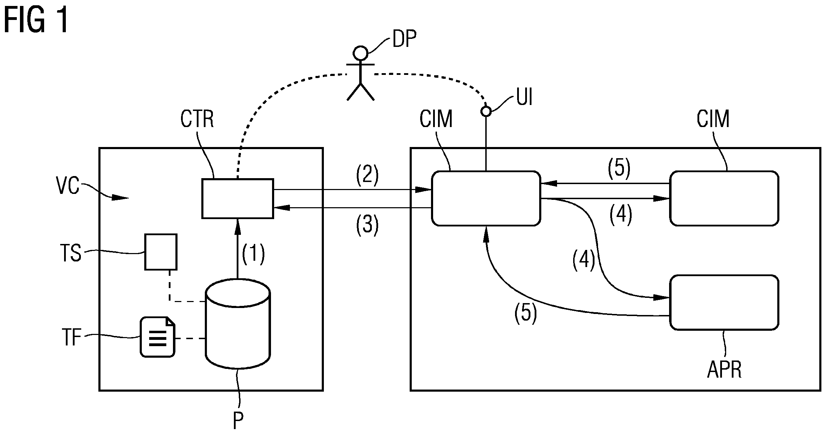

As an embodiment of the invention FIG. 1 illustrates a technical system with computational resources, which combines different existing methodologies of automated software improvement to aim for a more general approach of optimizing software.

A version control module VC (e.g., git) contains a project P with a test suite TS. With respect to git (source code management tool) vocabulary, a Project is the folder in which the actual content (files) is maintained. Whereas Repository is the folder inside which git keeps the record of every change been made in the project folder. Git is distributed version control system, which means several repositories are continuously synchronized. The very minimum is a repository at the developer's local machine and a central repository, which is commonly known as project location. (Project P = central Repository)

Additionally, a file (= technical specification file TF) describing necessary project attributes is given. Such attributes are for example:
- A command to execute the test suite
- A command to compile the project
- The programming language (Java, C, etc.
- Required parameters for compilation
- Required dependencies for compilation
- Maximum patch search time
- Maximum amount of patches
- Maximum repetition rate for non-deterministic tools

The technical specification file TF might be written in YAML. YAML is a human-readable data-serialization language. It is commonly used for configuration files and in applications where data is being stored or transmitted.

A CI (= continuous improvement) task runner CTR checks if the technical specification file TF is technically correct (path 1 in FIG. 1) and copies the whole project with the technical specification file TF to a control instance module CIM (path 2 in FIG. 1), which is returning a link to a repair session in a short time (e.g., within minutes) (path 3 in FIG. 1). The repair session can take several hours (depending on the kind and number of bug(s)). The CI pipeline is not blocked as the progress can be observed by a user DP (e.g., a sofwre developer) by accessing the control instance via the given link.

As an example, a possible pipeline execution for a null pointer execution will be given: After the CI task runner CTR has passed the codebase, the test suite TS, and the technical specification file TF the control instance module CIM will execute the test suite TS for the first time to collect additional information. Depending on the language there are several keywords to identify null pointer exception. For example in Java this could be "java.lang.NullPointerException".

One or several automated program repair tools APR can now be selected by combining all collected information. To continue with the null pointer exception example, it would be possible to select tools APR to fix such an error in Java, for example NPEFix (https://hal.archives-ouvertes.fr/hal-01419861/document). Whereas approaches like NPEFix are deterministic, other heuristic-based tools APR like GenProg or RSRepair (https://ieeexplore.ieee.org/abstract/document/6643409) are taxonomy-wise members of search-based software engineering, which implies some randomness while searching for a possible patch.

This means such tools APR can find a solution within several minutes, but it can also take several hours. Especially for methodologies like genetic programming, the (mostly random) start conditions have a certain impact on the search result.

On the other hand, long running searches are less often successful, as they tend to be stuck in "search canyons with dead ends". So, there is no need to run several searches with the same tool APR for a long time.

Path 4 in FIG. 1 shows the start of an APR Tools by passing the project to a specific tool. Path 5 is a report of the eventual result of the tool. A result can contain a candidate patch, but it is not required. The result signals the control instance module CIM a tool APR has finished its task/run.

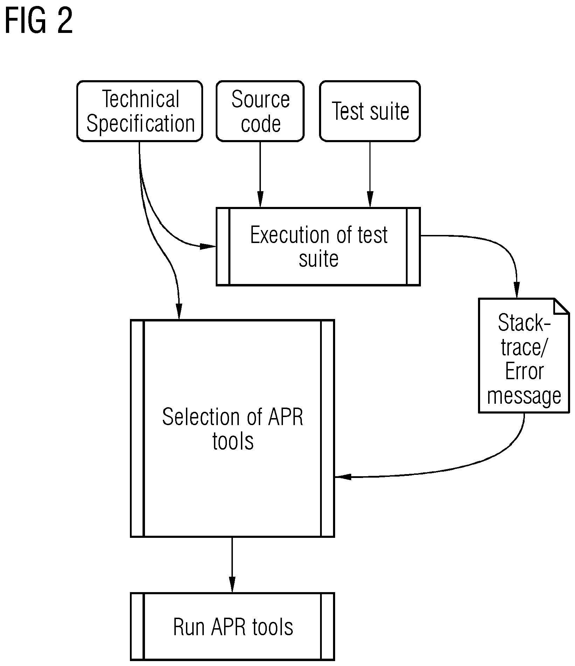

This selection method is illustrated in FIG. 2 (selection is based on specification file and error messages of the test suite executing the source code of the project which should be approved) and leads to a set of tools APR, which are suitable to find a patch for the target programming language (for the project). Some of them are deterministic, some of them are specialized on a very specific kind of bug (= bug-specific). A reasonable strategy to run the selected tools is as follows:
1. Start counting down the timeout from the technical specification TS file
2. If there are any specialized tools APR (selected by a first book of rules), run them at first (gaining first patches).
3. Afterwards run the rest of the selected (according to a second book of rules) tools APR (gaining second patches)
4. If any tool APR found a patch, compare it to the already found patches. All patches are clustered by Levenshtein distance. The distance itself can be defined in the technical specification file TS, as a reasonable value depends on the programming language and the complexity of the bug. A cluster of patches (very similar patches) is considered as one patch.
5. If a tool APR is marked/known as non-deterministic it will be restarted until the maximum repetition limit has been reached, within the maximum time out limit.
6. The patch search ends if:
   a. No tool is running anymore,
   b. the requested number of patches has been found/generated, or
   c. the global maximum time out limit is up.
7. At the end, all first and second patches are accessible via the control instances module's CIM user interface UI as git patch file (see FIG. 1)

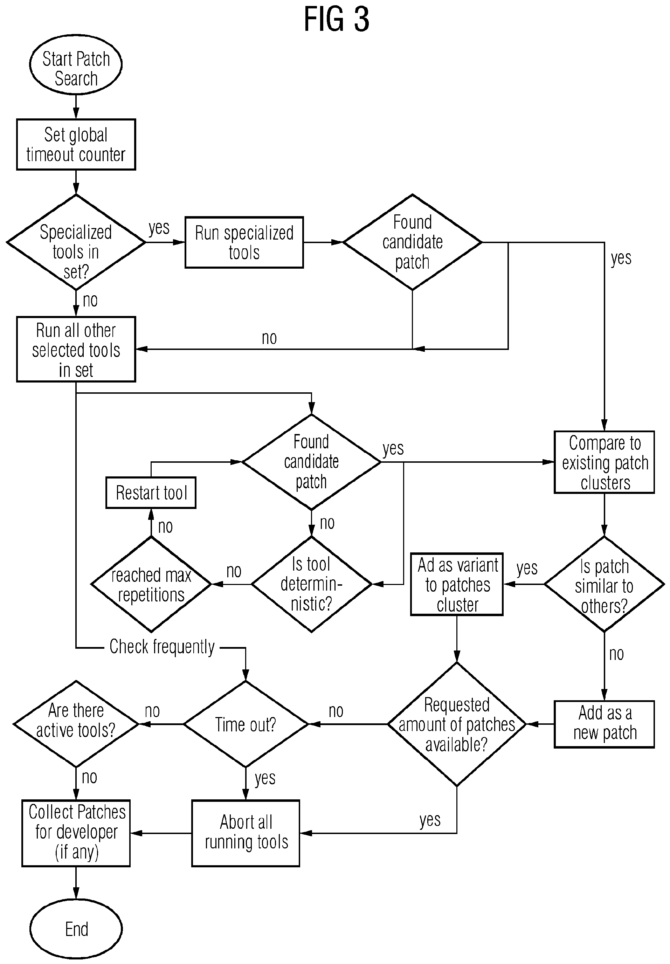

The flow chart of FIG. 3 illustrates the method for generating first and second patches (denoted as patches in FIG. 3) in detail.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- APR: automated program repair tool (shortly "tool")
- CIM: control instance module
- CTR: continuous improvement task runner
- DP: user
- P: project
- TF: technical specification file
- TS: test suite
- UI: user interface
- VC: version control module

## Claims

1. Automated method for generating candidate patches for improving a computer program, **characterized by** the steps:
- Deploying at least one general automatic program repair tool (APR) selected according to a first book of rules,
- if possible, deploying at least one specialized automatic program repair tool (APR) selected according to a second book of rules,
-- defining a global maximum timeout limit for running all tools (APR) and a maximum repetitions limit for running each tool,
- if a specialized tool (APR) is deployed, then running the at least one specialized tool (APR) generating at least one first patch,
- running the at least one general tool (APR) and generating at least one second patch, whereby
- if a general tool (APR) is marked or known as non-deterministic the general tool will be restarted until the maximum repetition limit has been reached, and
- by comparing newly generated first and second patches with already generated first and second patches clustering the first and second patches by Levenshtein distance,
- generating of first and second patches is ending if any general tool (APR) is not running anymore, a pre-defined number of first and second patches has been generated, or the global maximum timeout limit is up, and
- presenting the generated first and second patches to a user (DP).

2. Method according to claim 1, whereby
the first and second book of rules comprises rules to generate first and second patches suitable for the target programming language of the computer program.

3. Method according to claim 1 or 2, whereby
the first book of rules comprises rules derived from a pre-defined technical specification file (TF) and error messages of a pre-defined test suite (TS) executing the computer program.

4. Method according to one of the previous claims, whereby the second book of rules comprises rules to deploy specialized tools (APR) specialized on at least one pre-defined target-bug.

5. Method according to one of the previous claims, whereby the Levenshtein distance is defined in the technical specification file (TF) as a pre-defined value depending on the programming language and the complexity of a bug.

6. Method according to one of the previous claims, whereby the cluster of first and/or second patches is considered as one patch and comprises similar patches according to the Levenshtein distance.

7. Method according to one of the previous claims, whereby the generated first and second patches are accessible via a control instance module's (CIM) user interface (UI) as a git patch file.

8. Method according to one of the previous claims, whereby the tools (APR) comprising tools with a template-based approach, a learning-based approach, a constraint-based approach, and/or a heuristic-based/search-based approach.

9. Computational arrangement comprising computational capacity, whereby the arrangement is set-up to perform a method according to one of the previous claims.

10. Using a computational arrangement according to claim 9 to generate first and second patches to fix bugs in a software program.
